Europäisches Patentamt

European Patent Office

Office européen des brevets

(19)

(11) Numéro de publication : **0 088 003**
**B1**

(12) **FASCICULE DE BREVET EUROPÉEN**

(45) Date de publication du fascicule du brevet :
22.01.86

(51) Int. Cl.⁴ : **B 01 D 33/24**

(21) Numéro de dépôt : **83400331.1**

(22) Date de dépôt : **16.02.83**

(54) Filtre à table horizontale rotative et structure porteuse pour un tel filtre.

(30) Priorité : **02.03.82 FR 8203382**
**02.03.82 FR 8203383**

(43) Date de publication de la demande :
**07.09.83 Bulletin 83/36**

(45) Mention de la délivrance du brevet :
**22.01.86 Bulletin 86/04**

(84) Etats contractants désignés :
**BE CH DE IT LI NL SE**

(56) Documents cités :
**GB-A- 2 085 746**
**US-A- 3 080 063**
**US-A- 3 361 262**
**US-A- 3 485 375**
**US-A- 3 587 862**

(73) Titulaire : **RHONE-POULENC CHIMIE DE BASE**
**25, quai Paul Doumer**
**F-92408 Courbevoie (FR)**

(72) Inventeur : **Mention, Jean-Paul**
**3, Chemin de Matras Saint-Clair du Rhône**
**F-38370 Les Roches de Condrieu (FR)**
Inventeur : **Aoustin, Jean**
**2, rue de la Corderie**
**F-76000 Rouen (FR)**
Inventeur : **Wallon, Bernard**
**65, rue E. Lesueur**
**F-76130 Mont-Saint-Aignan (FR)**

(74) Mandataire : **Dubruc, Philippe et al**
**RHONE-POULENC RECHERCHES Service Brevets**
**Chimie et Polymères 25, quai Paul-Doumer**
**F-92408 Courbevoie Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un filtre à table horizontale rotative et une structure porteuse pour un tel filtre.

Les filtres à table horizontale, se composent généralement d'une structure porteuse circulaire entraînée en rotation régulière et continue par un dispositif approprié et d'une table de filtration circulaire montée sur cette structure.

Plus précisément, la structure porteuse est généralement constituée d'une couronne entraînée par un moteur et de goussets radiaux solidaires de cette couronne ainsi que de goussets circonférentiels solidaires des goussets radiaux. Cette structure peut être en acier doux.

La table de filtration est elle-même composée de plusieurs secteurs comprenant chacun des parois radiales, une ou plusieurs parois formant fond, des parois circonférentielles délimitant un ou plusieurs caissons trapézoïdaux et une paroi supérieure qui est constituée d'une tôle percée d'orifices sur laquelle est fixée la toile filtrante. Cette table peut être constituée en inox.

Le fond de chaque caisson est raccordé par des conduits à un circuit de vide qui permet ainsi d'évacuer le liquide de filtration qui a pénétré dans le caisson à travers la toile filtrante.

Un exemple d'un tel filtre est donné notamment par le brevet français FR-A-1 327 693.

L'assemblage de la table sur la structure porteuse est réalisé généralement par boulonnage, de sorte que ces deux éléments sont tout à fait solidaires l'un de l'autre. Plus précisément, les parois constituant le fond de la table et qui peuvent présenter la forme d'augets trapézoïdaux sont soudées à leur pourtour aux parois radiales et circonférentielles précitées. D'autre part, les parois radiales sont montées de manière à venir enserrer par paire, l'extrémité supérieure des goussets radiaux de la structure. Les parois de la paire concernée sont liées entre elles par une première série de boulons et elles sont aussi fixées sur le gousset radial correspondant par une seconde série de boulons.

Par ailleurs, les parois circonférentielles de la table délimitant les caissons, prennent appui et sont aussi boulonnées sur des goussets circonférentiels correspondants de la structure.

Bien que les filtres du type décrit se caractérisent par une grande simplicité de fonctionnement, une bonne fiabilité et permettent une capacité de production élevée, ils peuvent présenter cependant un inconvénient dans certains cas.

En effet, on a pu observer une déformation de la table de filtration hors des limites de tolérance lors du fonctionnement de filtres de grande taille ou lorsque deviennent plus sévères les conditions de mise en œuvre du procédé dans lequel est utilisé le filtre, par exemple, pour des températures ou des tonnages plus élevés ou enfin dans le cas d'utilisation pour le filtre de matériaux à coefficient de dilatation très élevé.

On a ainsi pu constater que la table, plane à froid, devient légèrement sphérique en marche, le centre de la table se levant, l'extérieur s'abaissant. Il y a pivotement des secteurs de la table autour de la couronne de la structure.

Une telle déformation est gênante. Notamment, elle complique ou gêne l'extraction du gâteau de filtration. En effet, lorsque l'extraction est réalisée par une vis sans fin disposée horizontalement et à une hauteur bien précise au-dessus de la table, toute augmentation de cette hauteur a pour conséquence de diminuer la quantité de gâteau extrait et toute diminution de cette même hauteur entraîne un risque d'arrachement de la toile de filtration par la vis. On est donc amené à régler plus ou moins souvent la position de la vis d'extraction.

Par ailleurs, les contraintes engendrées par cette déformation peuvent entraîner, entre autres, une usure accélérée du filtre ou des ruptures des soudures notamment entre secteurs voisins, ce qui peut provoquer un défaut d'étanchéité de la table et un risque de passage du filtrat entre la table et la structure.

L'objet de l'invention est un perfectionnement aux filtres du type décrit ci-dessus, de manière à améliorer leur bon focntionnement, c'est-à-dire, notamment, une excellente planéité et une étanchéité parfaite de la table, dans des conditions sévères d'utilisation, en particulier à haute température, et ceci sans introduire de contraintes ou de déformations inadmissibles pour le filtre.

Dans ce but, le filtre à table horizontale rotative de l'invention qui est du type comprenant une structure porteuse circulaire entraînée en rotation par des moyens moteurs et une table de filtration horizontale circulaire supportée par la structure, est caractérisé en ce que la table et la structure sont en partie désolidarisées et en ce qu'elles sont reliées par des moyens d'entraînement de liaison à au moins un degré de liberté radial qui à la fois assurent l'entraînement de la table par la structure et qui permettent un déplacement relatif de l'une par rapport à l'autre dans au moins une direction radiale.

Selon un mode de réalisation particulier de l'invention, les moyens de liaison précités comprennent chacun un assemblage d'un élément mâle et d'un élément femelle, l'un et l'autre desdits éléments étant solidaires de la table et de la structure respectivement.

Selon un mode de réalisation préféré de l'invention, l'élément femelle est une coulisse radiale, de préférence avec un profil sensiblement en U, et l'élément mâle comprend au moins un galet et/ou au moins un patin en un métal ou en un matériau à bas coefficient de frottement par rapport à l'élément femelle, l'élément mâle étant logé dans la coulisse de manière à ce qu'au moins un galet ou au moins un patin soit normalement en contact avec le fond de celle-ci.

Par ailleurs, toujours dans le même but, l'invention concerne aussi une structure porteuse circulaire pour le support et l'entraînement en rotation d'une table de filtration horizontale d'un filtre rotatif, du type comprenant :

— une première couronne d'entraînement engageant des moyens moteurs et reposant sur un premier chemin de roulement ;

— une seconde couronne interne de liaison ;

— des éléments d'assemblage radiaux, tels que des goussets, fixés et reposant sur la première couronne et solidaires à leur extrémité interne et par des moyens de fixation de la seconde couronne ; et

— une ou plusieurs séries radialement espacées d'éléments d'assemblage circonférentiels, tels que des goussets, circonférentiellement espacés, solidaires des éléments d'assemblage radiaux et disposés par deux, de part et d'autre de ceux-ci ; et cette structure est caractérisée en ce qu'elle comporte des moyens de liaison circonférentiels entre les éléments circonférentiels d'une même série et des moyens de liaison et de contreventement diagonaux placés entre des éléments radiaux consécutifs.

Le montage de la table et de la structure selon l'invention est particulièrement avantageux car il désolidarise en partie ces deux éléments et leur permet donc de jouer l'un par rapport à l'autre, en fonction des contraintes différentes auxquelles ils sont respectivement soumis, et notamment, par suite des gradients de température entre ces éléments et à l'intérieur même de chacun d'eux, lors de la marche du filtre.

Par ailleurs, malgré la désolidarisation partielle de la structure et de la table résultant du type de moyens de liaison employés, ceux-ci peuvent néanmoins encaisser et transmettre tous les efforts d'origine mécanique qui apparaissent notamment lors de la rotation du filtre et ils assurent ainsi un entraînement correct de la table par la structure.

Enfin, grâce à sa construction, la structure porteuse de l'invention, offre une planéité précise dans les conditions les plus sévères d'emploi.

L'invention sera mieux comprise et d'autres caractéristiques, détails et avantages de celle-ci apparaîtront plus clairement au cours de la description explicative qui va suivre, faite en référence aux dessins schématiques annexés donnés uniquement à titre d'exemples illustrant plusieurs modes de réalisation de l'invention et dans lesquels :

la figure 1 est une vue partielle de dessus, partiellement éclatée, d'un filtre selon un mode de réalisation particulier de l'invention ;

la figure 2 est une demi-vue en coupe d'un filtre selon l'invention ;

la figure 3 est une vue de face d'un moyen de liaison de la table à la structure, selon un premier mode de réalisation de l'invention ;

la figure 4 est une vue de face d'un moyen de liaison, selon un deuxième mode de réalisation de l'invention ;

la figure 5 est une vue de côté du moyen de liaison de la figure 4 ;

la figure 6 est une vue de face d'un moyen de liaison selon un troisième mode de réalisation de l'invention ;

la figure 7 est une vue de face d'un moyen de liaison selon un quatrième mode de réalisation selon l'invention ;

la figure 8 est une vue de dessus du moyen de liaison de la figure 7 ;

la figure 9 est une vue schématique de dessus d'une première variante d'une structure porteuse d'un filtre selon l'invention ;

la figure 10 est une vue de dessus, partielle et agrandie de la structure de la figure 9 ;

la figure 11 est une vue partielle en coupe selon l'axe AA de la figure 10 ;

la figure 12 est une vue partielle en coupe selon l'axe BB de la figure 10 ;

la figure 13 est une vue partielle en coupe selon l'axe CC de la figure 10 ;

la figure 14 est une vue partielle en coupe selon l'axe DD de la figure 10 ;

la figure 15 est une vue schématique de dessus d'une seconde variante d'une structure porteuse de l'invention ;

la figure 16 est une vue schématique de dessus d'une structure porteuse selon une troisième variante de l'invention.

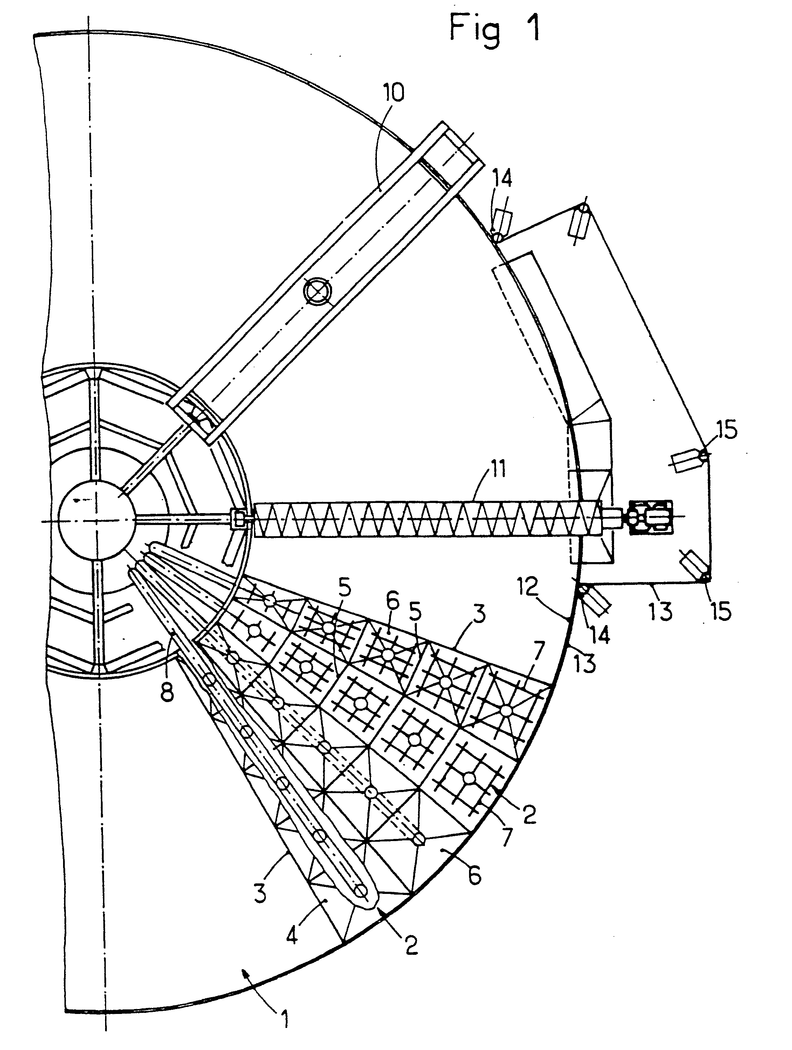

Sur la figure 1, on peut voir un filtre du type de l'invention comportant une table de filtration horizontale 1 en inox par exemple. D'une manière connue en soi, cette table est constituée de plusieurs secteurs 2 dont le nombre peut varier en fonction de la taille du filtre et par exemple, entre 30 et 36.

Chacun de ces secteurs comprend des parois radiales 3, une ou plusieurs parois formant fond 4 et de forme sensiblement pyramidale, trois dans l'exemple illustré, et des parois circonférentielles 5 qui délimitent ainsi un ou plusieurs caissons ou augets 6, ces caissons étant au nombre de cinq par secteur dans l'exemple illustré. Les caissons sont fermés vers le haut par une tôle percée d'orifices sur laquelle est fixée la toile de filtration (non représentées). Afin d'empêcher cette tôle de fléchir sous l'effet du vide, des supports de tôle 7 sont disposés dans chaque caisson.

Sur la figure 1, par souci de clarté, seuls quelques secteurs ont été représentés, la tôle supérieure étant supposée enlevée, de même que les supports de tôle n'ont été figurés que dans certains secteurs seulement.

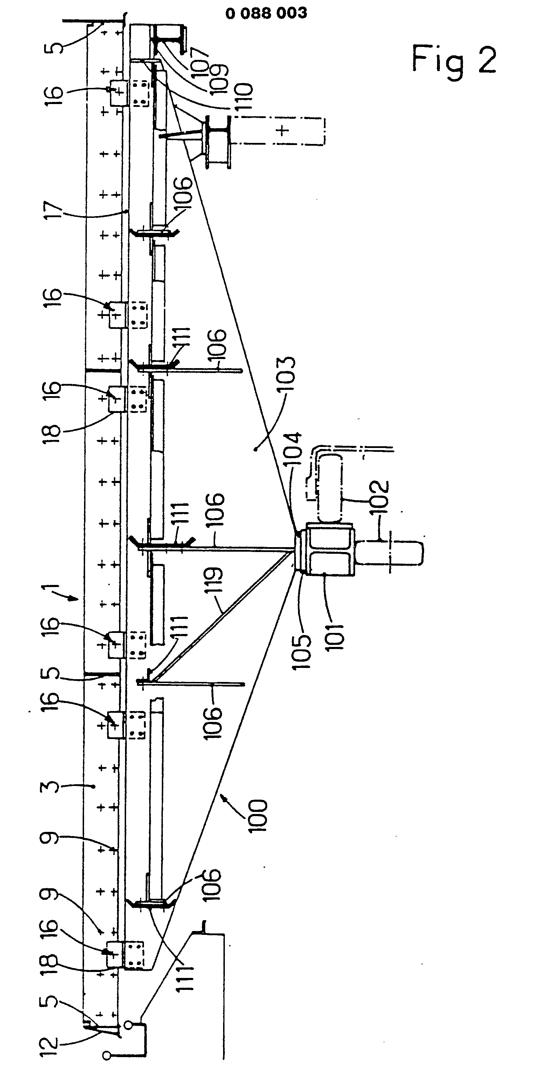

La figure 2 est une demi-vue en coupe d'un filtre du même type que celui de la figure 1, mais pour lequel chaque secteur ne comporte plus que trois caissons ou augets 6. Le centre du filtre est situé à droite de la figure.

Comme cela apparaît sur les figures 1 et 2 notamment, les fonds des caissons 6 sont raccordés par des collecteurs 8 de filtrat à un circuit de vide. Par ailleurs, les parois radiales 3 qui se font face de chaque secteur adjacent sont boulonnées l'une à l'autre sur toute leur longueur et sur leur partie située en dessous des fonds des augets ou caissons. On prévoit généralement deux rangées de boulons 9.

Le filtre comporte en outre, disposés au-dessus de la table de filtration et schématiquement représentés, des moyens de distribution 10 de la bouillie à filtrer, par exemple une nacelle du type du brevet français FR-A-2 418 012, et des moyens d'élimination 11 du gâteau de filtration, par exemple, une vis d'extraction ainsi que des moyens de lavage ou nettoyage de la toile de filtration (non représentés), placés notamment entre les moyens 10 et 11.

D'une manière connue, contre le bord extérieur 12 de la table vient s'adapter d'une manière étanche une bande sans fin 13 en matière souple et qui s'écarte dudit bord extérieur au droit de la zone de la table comprenant les moyens précités d'élimination du gâteau de filtration et de nettoyage de la toile. Des galets 14 et 15 assurent respectivement le maintien de la bande sur le bord extérieur 12 et sa mise en tension.

En faisant référence plus particulièrement à la figure 2, on peut voir que la table 1 est supportée par une structure 100, en acier doux par exemple, qui sera décrite en détail plus loin. Essentiellement, cette structure comporte tout d'abord une couronne d'entraînement 101 engageant des moyens moteurs et elle repose sur un chemin de roulement constitué de galets de roulement et de centrage 102. La structure comporte aussi des éléments d'assemblage radiaux 103, tels que des goussets, solidaires de la couronne et reposant sur celle-ci par l'intermédiaire de semelles 104, 105. Par ailleurs, la structure comporte plusieurs séries radialement espacées d'éléments d'assemblages circonférentiels ou latéraux 106 tels que des goussets verticaux disposés deux par deux, de part et d'autre de chaque gousset radial 103.

Généralement, la table et la structure sont disposées l'une au-dessus de l'autre de manière à ce qu'un élément ou un gousset radial 103 de la structure soit disposé au droit, c'est-à-dire en dessous de deux parois radiales jointives 3 de deux secteurs adjacents et dans un même plan vertical. On peut aussi prévoir de placer une paire d'éléments circonférentiels 106 de la structure sensiblement au droit d'une paroi circonférentielle 5 d'un secteur délimitant deux caissons.

On peut voir sur la figure 2 que selon la caractéristique principale de l'invention, la table de filtration ne repose pas directement sur la structure porteuse mais par l'intermédiaire de moyens de liaison 16 qui seront décrits en détails ci-dessous. Ces moyens de liaison assurent d'une part, la transmission des efforts et donc l'entraînement de la table par la structure et d'autre part, ils permettent un certain déplacement relatif de la table par rapport à la structure dans au moins une direction. Ces moyens de liaison sont constitués de manière à déterminer au moins un degré de liberté radial de la table par rapport à la structure, c'est-à-dire que les parois radiales 3 représentées sur la figure, peuvent se déplacer par rapport au gousset radial 103 qui leur correspond dans une direction parallèle au plan de cette figure.

Ainsi, la table et la structure sont en partie désolidarisées, contrairement aux filtres de l'art antérieur, le montage de l'une par rapport à l'autre, n'est plus absolument rigide.

Selon une caractéristique avantageuse de l'invention, la structure 100 et la table de filtration 1 sont séparées en hauteur par un espace 17 dans lequel sont logés au moins en partie, les moyens de liaison 16. Cet espace permet une isolation thermique par l'air entre la table et la structure qui sont à des températures différentes durant la marche du filtre. En effet, la table est en contact direct avec une bouillie dont la température peut varier par exemple entre 50 °C et 100 °C, voire même une température supérieure, alors que la structure reste à la température moyenne ambiante. Une telle isolation permet de limiter encore tout risque de déformation de la structure porteuse.

D'une manière générale et comme cela a été indiqué plus haut, les moyens de liaison comprennent chacun un assemblage d'un élément mâle et d'un élément femelle. Un des éléments de cet assemblage peut être fixé à l'extrémité inférieure de deux parois radiales, consécutives de deux secteurs adjacents et l'autre à l'extrémité supérieure d'un élément radial de la structure, par exemple d'un gousset situé au droit des parois radiales précitées dans le cas d'une disposition de la structure par rapport à la table du type de celle qui a été décrite plus haut.

Plus particulièrement, l'élément femelle peut être constitué par une coulisse radiale, c'est-à-dire, orientée longitudinalement selon un rayon du filtre, par exemple en inox, dont le profil sera, de préférence, sensiblement en U.

Dans la figure 2, on peut voir une telle coulisse 18 montée sur un gousset 103 et dans laquelle est logé l'élément mâle (non représenté) solidaire des parois.

En outre, la coulisse peut être en partie fermée par une paire de guides retenant l'élément mâle dans la coulisse et limitant ses mouvements vers le haut. Suivant les cas, ces guides seront rapportés ou viendront de matière avec la coulisse.

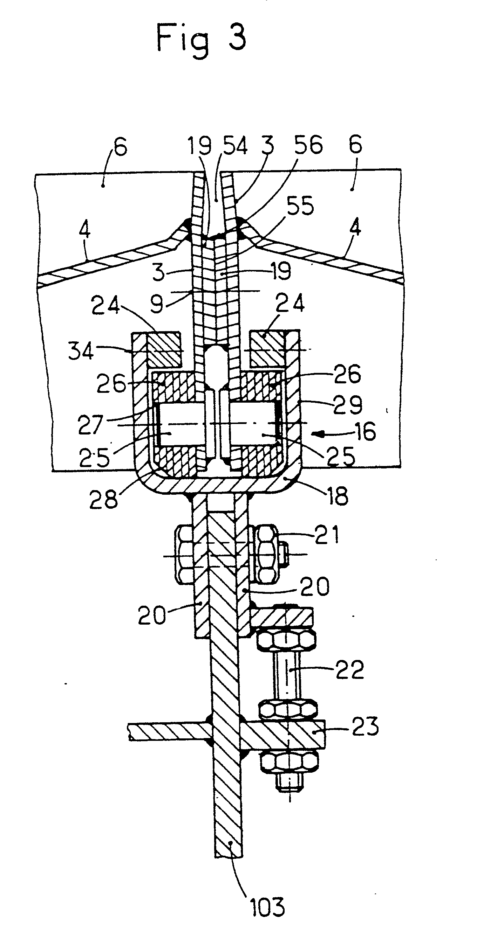

Différents modes de réalisations des moyens de liaison vont maintenant être décrits en faisant référence plus particulièrement aux figures 3 à 8.

Un premier mode de réalisation est illustré par la figure 3. Sur cette figure sont représentées les parois radiales 3 consécutives de deux secteurs adjacents et les parois 4 formant fond qui délimitent ainsi des caissons ou augets 6. Sur chacune des faces en regard des parois, sont soudés des bossages 19 qui sont maintenus jointifs l'un contre l'autre par une première série de boulons 9 schématiquement représentés par un trait d'axe. Au droit des parois radiales 3 est situé un gousset radial 103 de la structure porteuse.

Les parois 3 pénètrent par leur extrémité inférieure dans une coulisse 18 en forme de U qui est solidaire du gousset radial 103. Dans le cas présent, sur le fond externe de la coulisse, sont soudées deux flasques 20 qui viennent encastrer le gousset 103 et permettent un montage en enfourchement de la coulisse sur celui-ci. Un double boulonnage 21 fixe rigidement la coulisse sur le gousset. Par ailleurs, deux tiges filetées 22 relient une des flasques 20 à un élément de structure 23 solidaire du gousset disposé sur un côté de celui-ci et perpendiculairement, cet élément pouvant aussi être solidaire d'un gousset circonférentiel 106. On prévoit dans les flasques 20 pour le boulonnage des trous oblongs, de sorte qu'il est possible de régler la position en hauteur de la coulisse, par action sur les tiges filetées.

Par ailleurs, la partie supérieure de la coulisse est en partie fermée par des guides 24 disposés perpendiculairement aux bords latéraux de la coulisse. Pour permettre leur fixation à la coulisse, ces guides présentent un taraudage et la paroi de la coulisse un orifice correspondant, dans lesquels vient se loger une vis de serrage 34 schématiquement représentée par un trait d'axe sur la figure.

L'élément mâle de l'assemblage comprend deux axes 25 passant dans des trous situés sensiblement à l'extrémité inférieure de chacune des parois radiales 3. Les axes sont soudés sur les faces en regard des parois radiales 3 et s'étendent perpendiculairement aux faces opposées.

Sur chaque axe 25 est monté un patin 26. Chaque patin entoure complètement l'axe et vient donc se loger contre le fond interne de la coulisse et avec un certain jeu par rapport aux guides 24. Il peut aussi y avoir un certain jeu entre les patins et les bords latéraux 29 de la coulisse. En ce qui concerne plus précisément les patins, ceux-ci doivent présenter de préférence, un bas coefficient de frottement par rapport au matériau constituant la coulisse.

D'une manière générale, on pourra choisir pour les patins tout matériau présentant, outre le coefficient précité, une bonne résistance à l'abrasion, au vieillissement, à la déformation et au fluage, et une bonne résistance aux produits chimiques tels que les acides, les solvants ou l'oxygène.

Par exemple et notamment dans le cas d'une coulisse en inox, les patins peuvent être en un alliage métallique tel que le régule ou en un alliage à base de cuivre tel que le bronze. Ils peuvent aussi être constitués d'un matériau synthétique tel qu'un polymère à haut poids moléculaire (par exemple entre 0,5 et 4 millions) du type polyéthylène, notamment un polyéthylène chargé en fibre de verre, polypropylène, polyamide 6, chargé en fibre de verre, polytétrafluoroéthylène chargé en graphite, polyvinylidène difluoré, graphite.

Les patins 26 peuvent présenter une forme prismatique notamment sensiblement parallélépipédique. Comme on le voit dans le cas de la figure 3 notamment, ils peuvent comporter un orifice central 27 s'étendant dans toute leur épaisseur pour les enfiler, au montage, sur les axes 25. Ils pourraient aussi comporter une fente centrale ouvrant sur deux ou trois faces et permettant, au montage, de les faire glisser sur les axes. Par ailleurs, ils peuvent être chanfreinés par l'intersection 28 des faces venant en contact avec le fond et en regard avec le bord latéral 29 de la coulisse.

Ce chanfrein permet, lors du montage, de faciliter l'introduction du patin dans la coulisse, au cas où ces deux éléments ne seraient pas positionnés exactement l'un en face de l'autre.

On notera par ailleurs, que les deux axes 25 pourraient être éventuellement remplacés par un axe unique traversant les deux parois.

Naturellement, plusieurs assemblages identiques à celui qui vient d'être décrit, peuvent être montés le long d'un même gousset radial de la structure. Leur nombre est fonction des conditions d'utilisation imposées au filtre. De préférence, on aura au moins deux assemblages par caisson. C'est-à-dire qu'il y aura au moins deux assemblages sur une longueur d'un même gousset situé en dessous d'un caisson, ou la longueur comprise dans l'espace délimité entre deux parois circonférentielles 5 séparant deux caissons, bien entendu, un élément de l'assemblage étant fixé au gousset, l'autre aux parois radiales correspondantes. En outre, ces assemblages seront disposés de préférence au voisinage des parois circonférentielles. On peut voir sur la figure 2 une telle disposition des assemblages de liaison. On notera enfin que pour tous les différents modes de réalisation des assemblages de liaisons qui vont être décrits ci-dessous, s'appliquent les remarques précédentes concernant leur disposition sur la table et la structure.

Lorsque le filtre est en marche, la coulisse encaisse donc les efforts verticaux dirigés vers le bas, aussi bien que latéraux, tels que ceux dus au couple d'entraînement ou à l'inertie lors de l'arrêt ou de la mise en marche du filtre.

D'autre part, les guides 24 encaissent les efforts verticaux vers le haut et enfin, les patins 26 peuvent glisser à l'intérieur de la coulisse 18 en réponse à toute contrainte radiale.

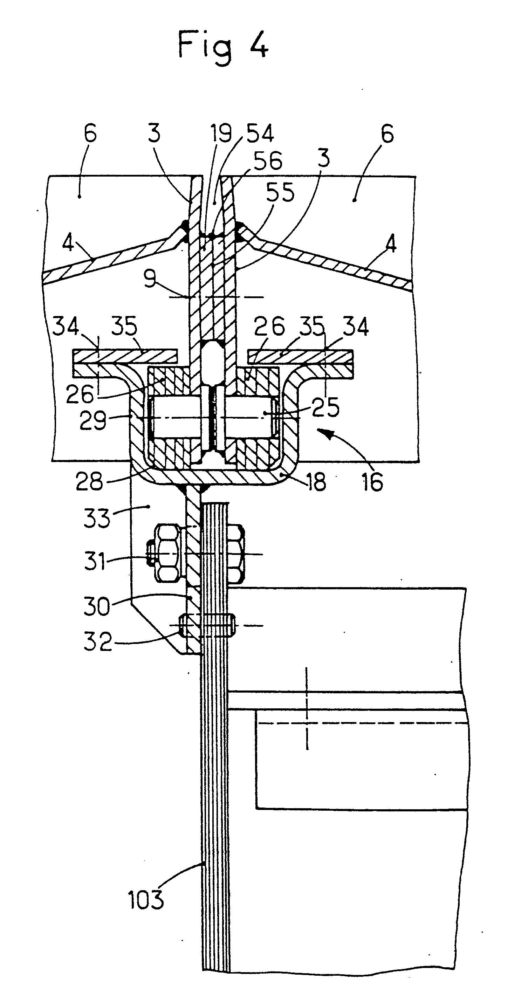

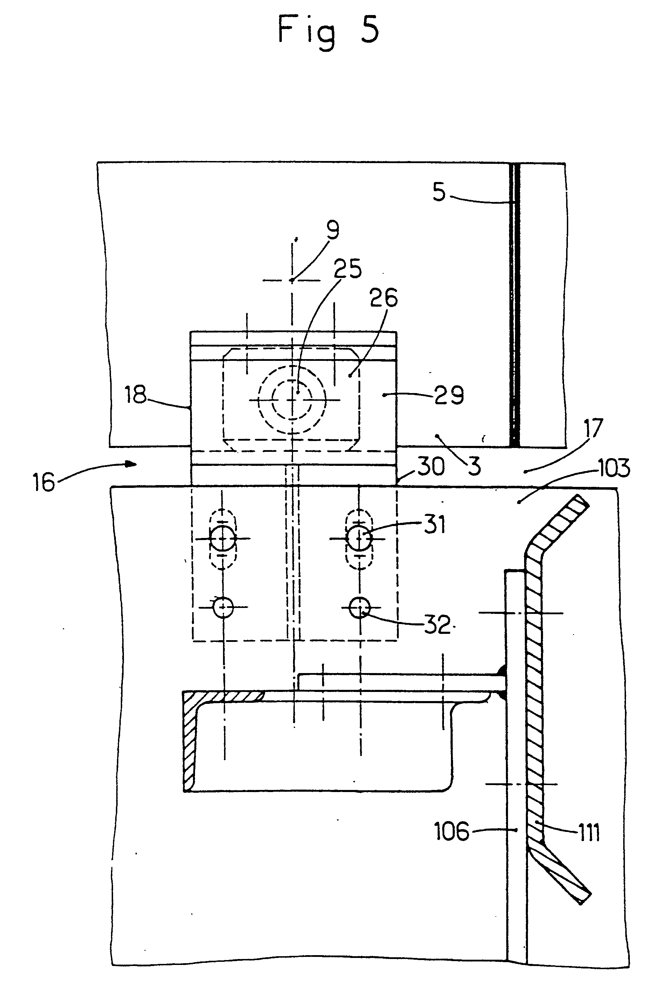

Les figures 4 et 5 illustrent une variante d'un moyen de liaison selon l'invention qui est en fait assez semblable au mode de réalisation qui vient d'être décrit précédemment. Les mêmes numéros de références ont été utilisés pour repérer les éléments de table et de structure identiques avec ceux de la figure 3.

Dans cette variante, la coulisse 18 ne comporte plus qu'une flasque unique 30 venant en appui sur le gousset radial 103. Comme précédemment, un double boulonnage 31 dans des trous oblongs de la flasque 30 assure la fixation de la coulisse. Un goujon de piètement 32 est prévu pour permettre un positionnement en hauteur correct sans réglage lors d'un remontage éventuel de la coulisse.

Au milieu de la flasque 30, entre les boulonnages et perpendiculairement à celle-ci et à la coulisse se trouve une nervure de renforcement 33.

Enfin, les bords latéraux verticaux 29 de la coulisse, dans leur partie supérieure, sont incurvés vers l'extérieur de manière à présenter chacun une surface plane horizontale sur laquelle sont boulonnés en 34 des guides 35.

Bien entendu, lors du fonctionnement du filtre, cet assemblage se comporte de la même manière que celui qui a été précédemment décrit. Il en est d'ailleurs de même pour les modes de réalisation ci-dessous.

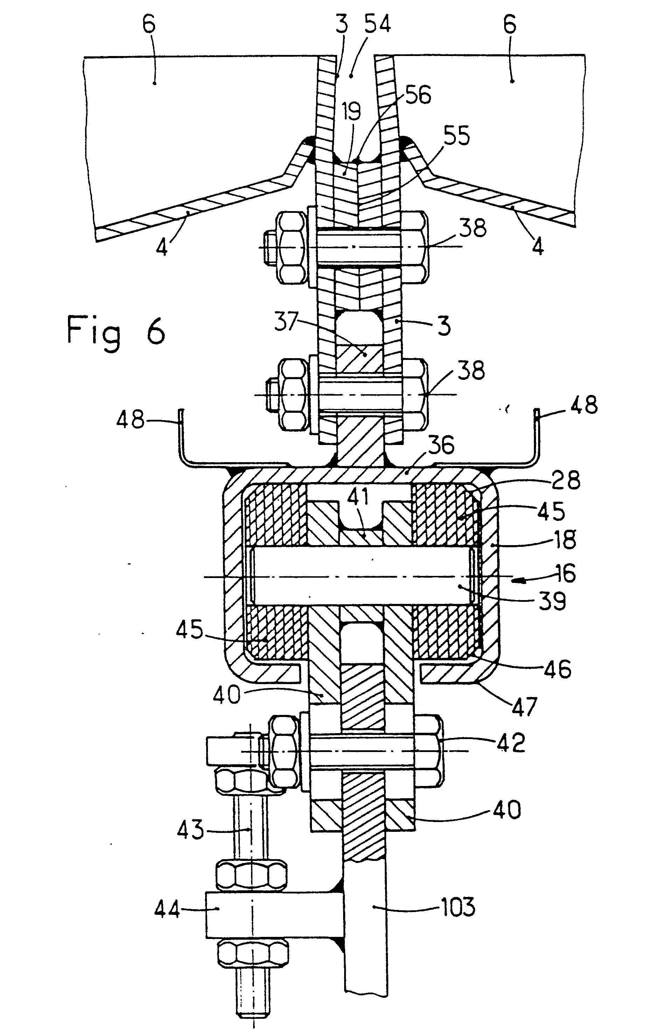

La figure 6 illustre une troisième variante d'un moyen de liaison selon l'invention.

Les éléments de table et de structure concernés ont été repérés par les mêmes numéros de référence que précédemment.

Selon cette variante, l'élément femelle est aussi une coulisse solidaire, cette fois, de la table de filtration et l'élément mâle comprend un axe sur lequel sont montés un ou plusieurs patins, et fixé sur ou vers l'extrémité supérieure d'un élément ou gousset d'assemblage radial de la structure situé au droit de la coulisse.

Plus précisément, cette coulisse 18 comporte dans un plan médian et perpendiculaire à son fond externe 36, une pièce soudée 37 formant tenon et venant s'encastrer dans la partie inférieure de l'espace libre délimité par deux parois radiales 3 consécutives de deux secteurs adjacents et les bossages 19. L'ensemble de ces éléments est fixé par un double boulonnage 38.

L'axe 39 de l'élément mâle est monté à la partie supérieure de deux flasques 40 séparées, au niveau de cet axe par une entretoise 41 et encastrant dans leur partie inférieure, un gousset radial 103 de structure. L'ensemble est fixé comme dans le cas de réalisation de la figure 3 par un système de boulon 42 et de tiges filetées 43 montées sur un support 44 constitué par un élément de la structure 100.

Deux patins 45 sont montés sur chaque partie de l'axe 39 débordant de part et d'autre des flasques 40.

Les patins 45 sont du même type que ceux précédemment décrits. On notera cependant, qu'ils comportent un second chanfreinage 46 à l'intersection des faces venant en regard d'un bord latéral de la coulisse et des guides 47 qui, dans le cas présent font partie intégrante de la coulisse. Bien entendu, un second chanfreinage de ce type pourrait être prévu sur les patins d'une manière générale, en dehors du·monde de réalisation particulier qui est présentement décrit.

Enfin, sur le fond externe 36 de la coulisse, sont fixées, de part et d'autre des deux parois radiales 3, des cornières 48. Ces cornières peuvent d'ailleurs s'étendre d'une coulisse d'un premier assemblage à une autre ou aux autres coulisses d'autres assemblages montés sur le même gousset 103 et ceci, sur toute la longueur d'un gousset. Ces cornières sont disposées de manière à former une gouttière qui peut ainsi récupérer tout liquide ou filtrat qui aurait pu s'infiltrer sous la table de filtration et en particulier, à la jonction de deux secteurs consécutifs. Ce filtrat peut ensuite être écoulé à la périphérie externe ou interne du filtre.

Le mode de réalisation qui vient d'être décrit présente donc l'avantage de protéger par la coulisse 18 et les cornières 48, le patin 45 de tout contact avec un fluide pouvant provenir de la table 1, par exemple de l'acide.

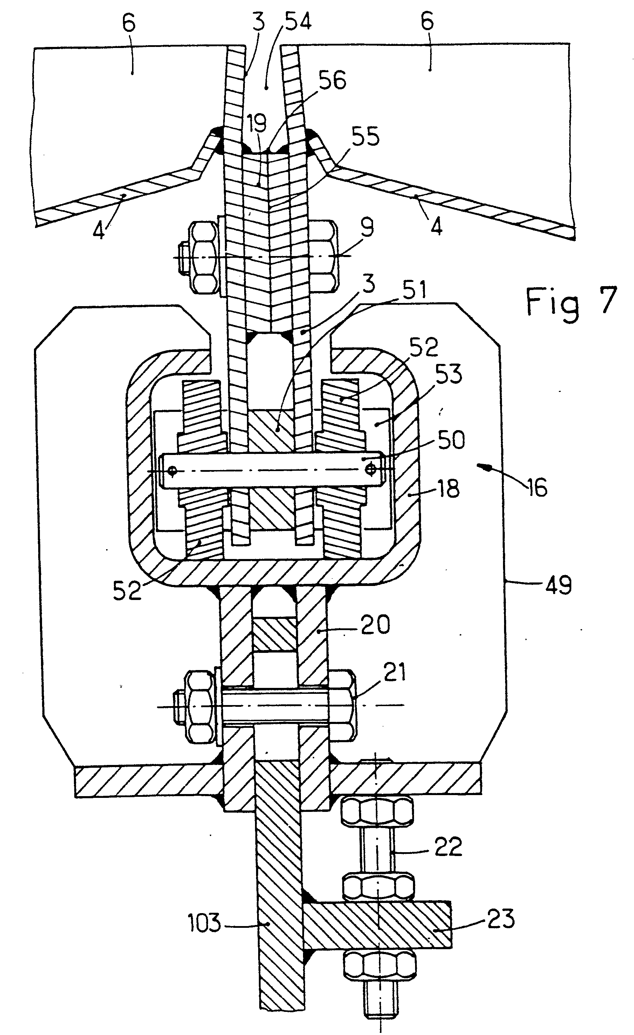

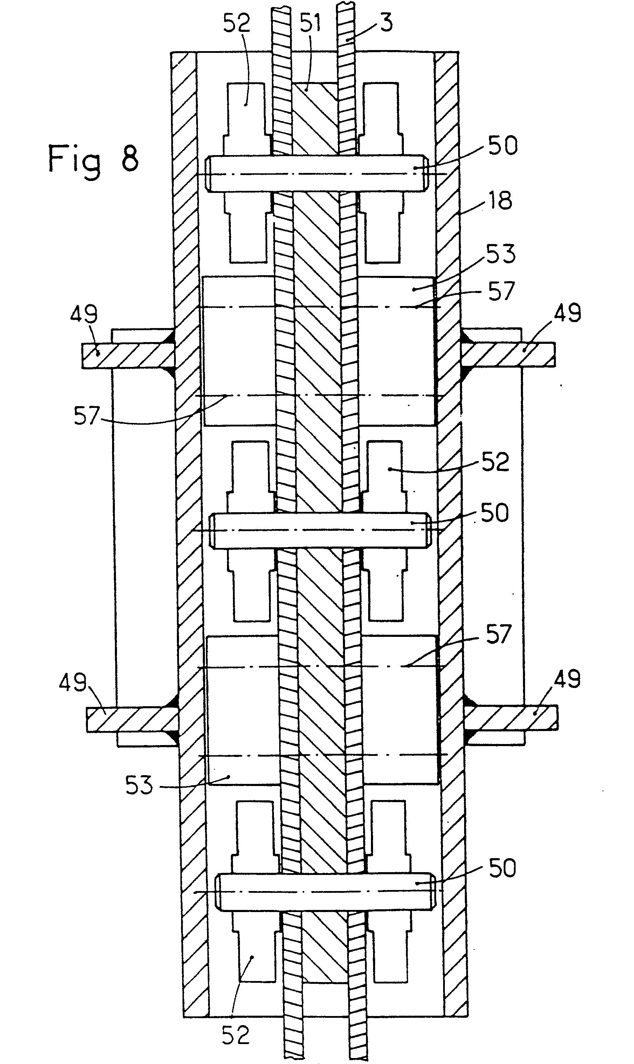

Les figures 7 et 8 illustrent un autre mode de réalisation dans lequel les patins de l'élément mâle sont au moins en partie remplacés par des galets de roulement.

D'une manière générale, l'élément femelle comprend toujours une coulisse et l'élément mâle comporte une ou plusieurs paires de galets roulant sur le fond de la coulisse et un ou plusieurs patins transversaux disposés parallèlement à l'axe de rotation desdits galets et en dehors de leur plan de roulement, notamment entre deux paires de galets consécutives et pouvant venir en appui avec les bords latéraux de la coulisse.

Revenant au cas plus particulier des figures 7 et 8, dans lesquelles les éléments de table et de structure ont été repérés comme précédemment, on peut voir une coulisse 18 montée sur un gousset radial de la même manière que dans le cas de la coulisse du mode de réalisation de la figure 3. La coulisse 18 peut comporter deux paires de nervures de renforcement 49. L'élément mâle comporte trois axes ou éventuellement six demi-axes 50 passant dans des trous situés sensiblement à l'extrémité inférieure de chacune des parois radiales 3 consécutives de deux secteurs adjacents et qui sont séparées au niveau de cet axe par une entretoise mobile 51.

Sur chacune des parties externes de chacun des axes 50, sont montés des galets de roulement 52. Ces galets peuvent avoir une forme quelconque et ils sont constitués d'un matériau du même type que celui qui a été précédemment décrit au sujet des patins. Ces galets peuvent être montés sur les axes par l'intermédiaire de tout roulement convenable tel qu'un roulement à billes ou à aiguilles.

Afin de permettre la transmission des efforts latéraux, l'élément mâle comprend en outre, des patins transversaux 53 montés sur les parois 3, par exemple par des boulons noyés, schématiquement repérés par 57. Ces patins sont disposés par paires, chaque paire étant logée entre deux paires de galets et les patins de chaque paire étant placés sur chacune des faces opposées des parois radiales 3.

Comme on peut le voir sur la figure 7, les patins transversaux ne sont pas en contact avec le fond de la coulisse ni d'ailleurs avec les guides de celle-ci. Par contre, leur largeur est telle qu'ils ne présentent que peu ou pas de jeu avec ses bords latéraux et qu'ils empêchent tout contact de ceux-ci avec les axes portant les galets ou même les galets.

Lors du fonctionnement du filtre, les galets 52 roulent sur le fond de la coulisse en réponse aux contraintes radiales et les patins transversaux 53 transmettent les efforts latéraux.

Un autre aspect de l'invention concerne le joint entre les secteurs adjacents et plus précisément entre les parois radiales 3 qui les délimitent.

Comme on l'a vu plus haut, les parois radiales 3 viennent en contact l'une de l'autre par des bossages 19. La gorge 54 située au-dessus des bossages sert à la fixation des toiles. En effet, cette fixation peut se faire en enfonçant un jonc de caoutchouc avec la toile. Il peut y avoir des risques d'infiltration de liquide à travers la toile au niveau de cette gorge, et le liquide peut se retrouver en contact avec la partie supérieure des bossages. Il est donc nécessaire de rendre étanche la jonction 55 de ces bossages.

Jusqu'à présent, cette étanchéité était assurée par une soudure des deux bossages. Or, cette soudure présente présente deux inconvénients. Tout d'abord, lors du montage final du filtre sur le site d'exploitation, elle peut entraîner des contraintes et altérer les planéités obtenues lors des réglages du prémontage du filtre en atelier. Ensuite, lors du fonctionnement du filtre, les diverses contraintes qui s'exercent ont tendance à faire casser ces soudures.

Selon l'invention, la soudure est remplacée par un joint d'étanchéité élastique 56 placé au fond de la gorge 54 et entre les bossages 19 en un matériau vulcanisant à température ambiante tel que par exemple, un silicone. Un tel joint peut absorber en souplesse les mouvements des augets entre eux et permet ainsi une certaine désolidarisation des secteurs entre eux.

Bien entendu, il est tout à fait possible de conserver la soudure d'étanchéité entre les bossages et de recouvrir celle-ci d'un joint du type précité.

De plus, on pourra utiliser bien sûr, un joint d'étanchéité du même type en tout autre endroit du filtre où il pourrait se révéler utile, par exemple sur le bord extérieur 12 de la table 1, à la jonction entre deux secteurs adjacents.

La présente invention concerne aussi une structure porteuse pour un filtre à table horizontale rotative notamment pour un filtre du type de celui qui vient d'être décrit. En effet, pour obtenir un filtre fonctionnant correctement dans des conditions sévères et notamment à haute température, il importe que la structure porteuse soit constituée d'une manière telle qu'elle puisse présenter une planéité très précise dans ces conditions.

Différents modes de réalisation de cette structure porteuse vont maintenant être décrits en faisant plus particulièrement référence aux figures 2 et 9 à 16. Dans la description, les termes interne et externe seront employés pour distinguer les éléments qui sont plus ou moins proches du centre de la structure circulaire.

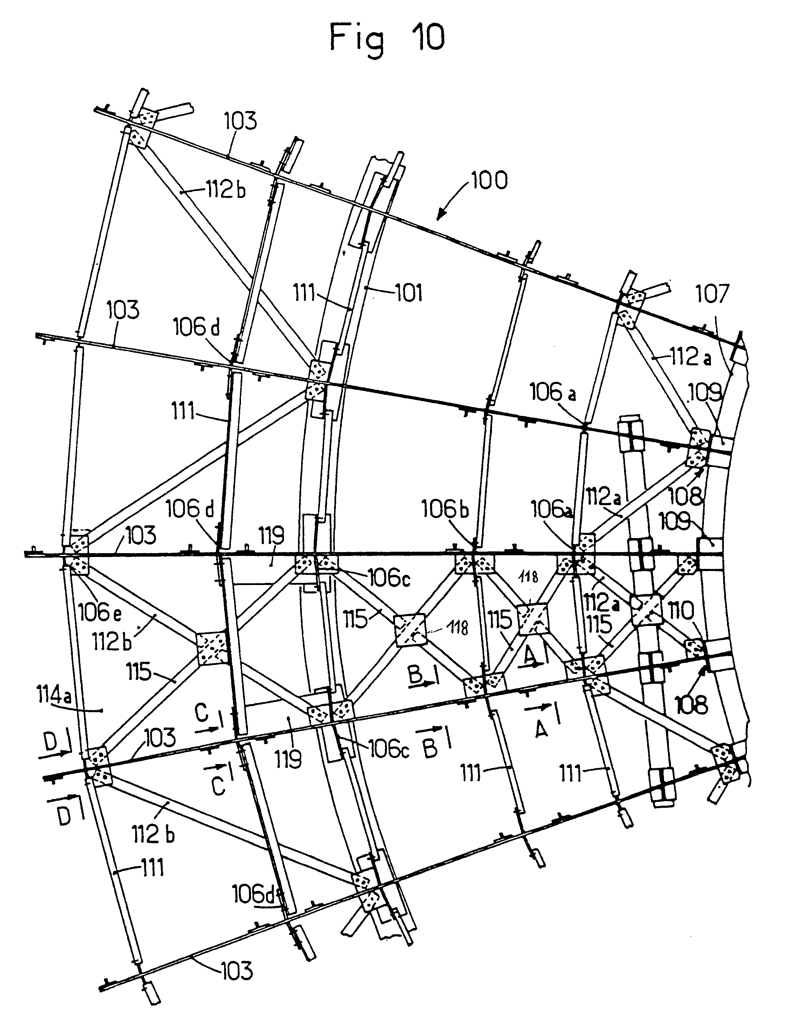

D'une manière générale, comme indiqué plus haut et en ce référant aux figures 2 et 10, la structure 100 comporte une première couronne d'entraînement 101 sur laquelle reposent par leur extrémité inférieure des éléments d'assemblage radiaux 103 tels que des goussets verticaux. En outre, la structure comporte une seconde couronne interne de liaison 107 qui peut éventuellement reposer sur un second chemin de roulement. Les éléments ou goussets 103 sont solidaires de la seconde couronne par leur extrémité interne et par des moyens de fixation et éventuellement de raidissage 108. Ces moyens 108 peuvent être constitués de deux plats horizontaux 109 reposant sur la couronne 107 et enserrant l'extrémité inférieure de l'élément 103 reposant aussi sur cette couronne ; et de deux raidissages 110 verticaux enserrant l'extrémité de l'élément 103 et perpendiculaires à cet élément et aux plats 109.

Le nombre des goussets radiaux est fonction de la taille du filtre et du nombre de secteurs. Par exemple, il peut varier entre 30 et 36.

En outre, des éléments d'assemblage circonférentiels repérés par la référence générale 106, tels que des goussets, sont solidaires des éléments radiaux et disposés deux par deux de part et d'autre de ces éléments en séries radialement espacées a, b, c, d, e.

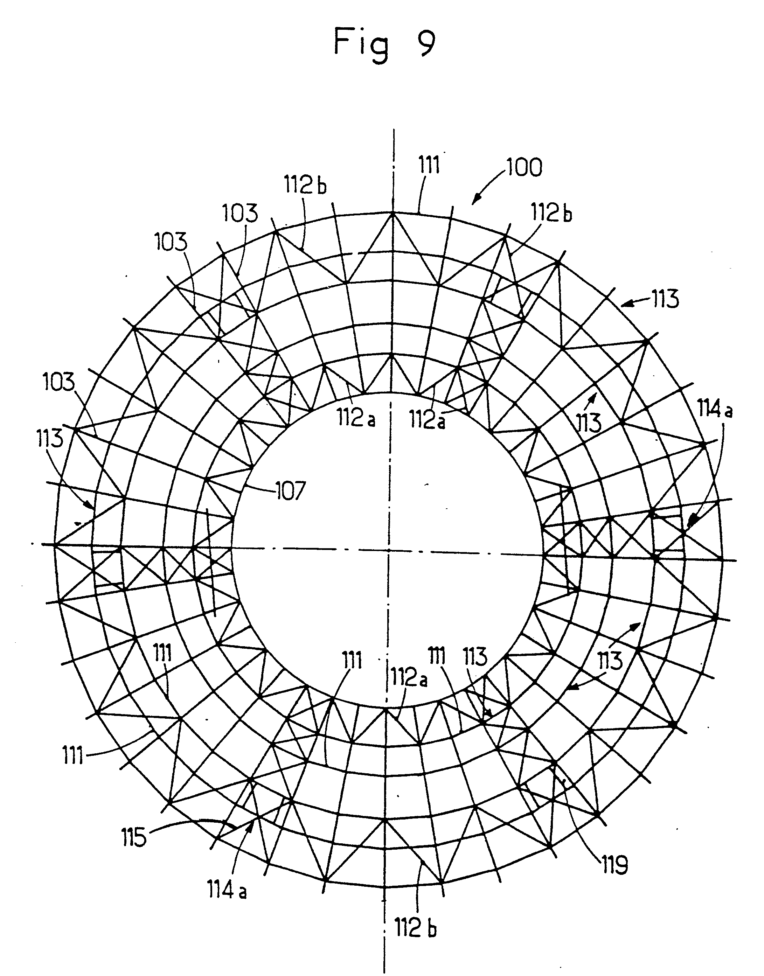

Selon l'invention, et comme cela apparaît sur les figures 9 à 16, la structure est munie de moyens de liaison circonférentiels 111 entre les éléments circonférentiels 106 d'une même série et de moyens de liaison et de contreventements diagonaux désignés par la référence générale 112 placés entre des éléments radiaux 103 consécutifs. L'ensemble des moyens de liaison et des éléments circonférentiels 111 et 106, forme une couronne de liaison 113 qui apparaît sous la forme de lignes continues dans les figures schématiques 9, 15 et 16 sur lesquelles, pour simplification, on n'a pas distingué les éléments et les moyens de liaison circonférentiels.

Dans le cas des figures 9, 10 et 15, on a ainsi cinq séries d'éléments d'assemblage circonférentiels 106 reliés entre eux par les moyens de liaison circonférentiels 111 formant donc cinq couronnes 113.

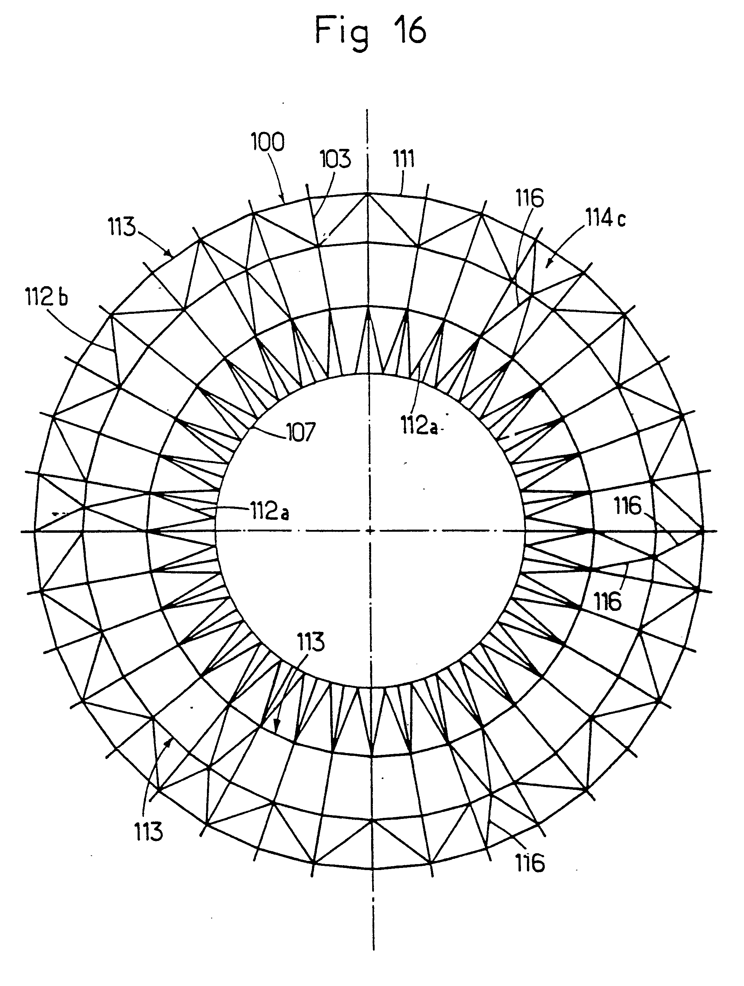

Pour la figure 16, on n'a plus que trois séries d'éléments 106 reliés par les moyens de liaison 111 formant ainsi trois couronnes 113.

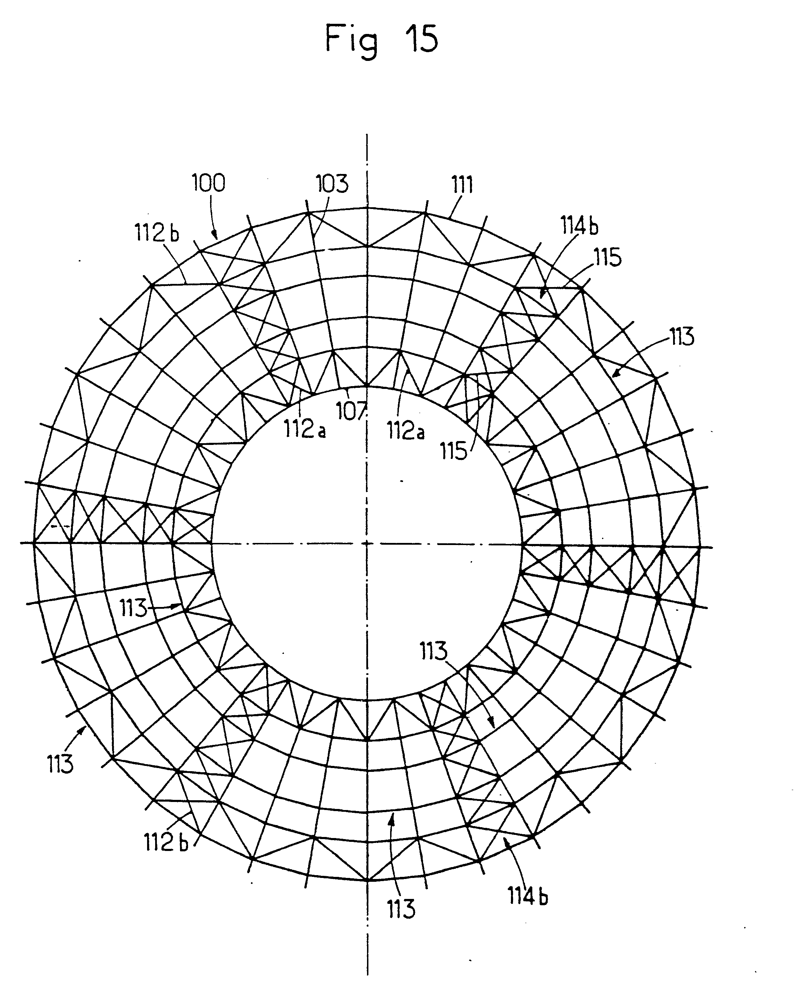

Selon une variante préférée de l'invention, la structure comporte deux séries de moyens de liaison et de contreventement diagonaux 112a, 112b. Les moyens de liaison 112a de la première série s'étendent entre la première série d'éléments circonférentiels 106, en partant du centre de la structure et les moyens de fixation et de raidissage 108. Les moyens de liaison 112b de la deuxième série s'étendent entre la dernière série d'éléments circonférentiels 106 et soit l'avant dernière série de ces mêmes éléments, comme par exemple dans le cas des modes de réalisation des figures 15 et 16, soit la série la précédant comme, par exemple, dans le cas des modes de réalisation des figures 9 et 10.

La liaison entre les éléments radiaux ou gousset 103 et les moyens de liaison diagonaux 112, se fait par exemple, à l'intersection des éléments 103 et des éléments circonférentiels 106 ou des moyens de fixation 108, en ce qui concerne les moyens de liaison de la première série. Les trois éléments de structures 103, 112 et 106 ou 108, sont donc liés et solidaires à cet endroit.

Dans le cas des figures 9 à 15, les moyens de liaison diagonaux 112 relient ainsi en diagonale deux éléments ou goussets radiaux consécutifs 103.

La figure 16 montre un mode de réalisation plus particulier dans lequel chaque moyen de liaison diagonal 112 a de la première série relie un élément radial ou gousset 103 à la seconde couronne de liaison 107, au milieu de la portion de celle-ci comprise entre deux éléments 103. Chaque élément 103 est ainsi relié à la couronne 107 par deux moyens de liaison 112.

Par ailleurs, la structure peut comporter un certain nombre de bras de renforcement 114a, 114b ou 114c.

D'une manière générale, ces bras de renforcement sont constitués par deux éléments radiaux consécutifs et une série d'au moins une paire de moyens de liaison diagonaux placés entre ces éléments radiaux et disposés de manière à ce que l'ensemble de la série desdits moyens de liaison diagonaux occupe la majeure partie de l'intervalle compris entre les moyens de fixation et la série ou la dernière série d'éléments circonférentiels.

Ces bras de renforcement peuvent être au nombre de 6 par exemple.

Ces bras peuvent être constitués par deux éléments radiaux consécutifs 103 reliés entre eux par une série de moyens de liaison diagonaux, qui peuvent comprendre certains des moyens de liaisons diagonaux 112a, 112b déjà décrits, et des moyens supplémentaires 115, 116, disposés croisés et deux à deux dans l'intervalle entre chaque série d'éléments circonférentiels 106 et dans l'intervalle entre la première série de ces éléments et les moyens de fixation 108. Notamment, dans le cas de la figure 15, les moyens de liaison diagonaux 112b, 115 sont disposés dans les deux intervalles séparant les trois dernières séries d'éléments circonférentiels. Par contre, dans le cas des figures 9 et 10, les moyens de liaison 112b, 115 sont disposés ou s'étendent dans l'intervalle entre la dernière série et celle précédant l'avant-dernière.

Dans le cas du mode de réalisation représenté par la figure 16, les bras de renforcement 114c comprennent les moyens de liaison diagonaux 112a de la première série disposés comme indiqué précédemment, puis une paire de moyens de liaison 116 disposée dans chaque intervalle respectif entre la première et la deuxième et la deuxième et la troisième série d'éléments circonférentiels 106. Ces moyens de liaison 116 sont chacun liés au moyen de liaison circonférentiel 111, reliant les éléments circonférentiels 106 en regard de la deuxième série et à un gousset 103.

Bien entendu, la description des bras de renforcement qui vient d'être faite, peut s'appliquer à toute structure comportant un nombre de séries d'éléments circonférentiels différent de ceux des figures.

Les figures 10 à 14 montrent plus précisément la manière dont peut être réalisé l'assemblage des différents éléments de la structure.

D'une manière générale, la liaison entre les moyens de liaison et les éléments radiaux peut se faire à l'intersection de ces éléments et des éléments circonférentiels 106.

Sur chaque gousset 103, sont montées cinq séries d'éléments d'assemblage circonférentiels 106a, 106b, 106c, 106d, 106e.

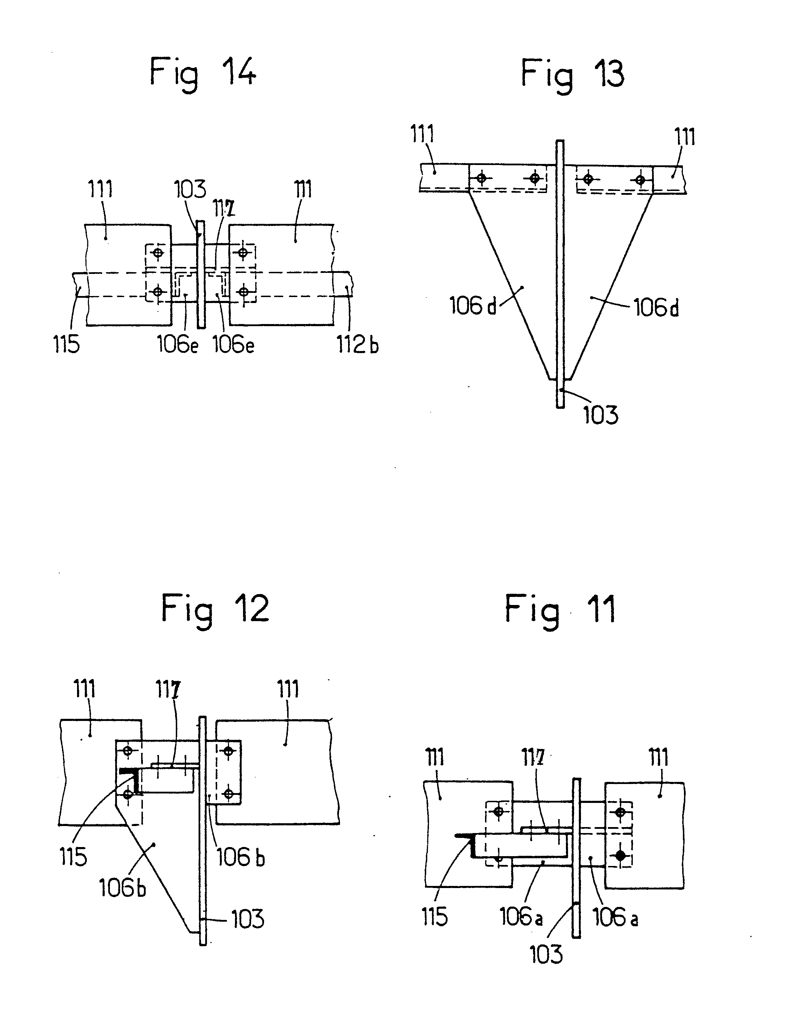

En ce qui concerne la première série ou série interne, on peut voir d'après la figure 11, qu'elle est constituée par des plats 106a. Ces plats peuvent présenter une longueur plus importante que ceux du reste de la série quand ils sont compris entre deux goussets 103 qui constituent un bras de renforcement.

La seconde série 106b, comme on le voit sur la figure 12, est en principe constituée de plats sauf dans les bras de renforcement où les éléments circonférentiels sont des goussets.

Les troisième et cinquième séries sont constituées de plats. La figure 14 montre par exemple, les plats 106e de la cinquième série. Comme on le voit sur la figure 13, la quatrième série est constituée de goussets 106d.

Les moyens de liaison circonférentiels 111 sont constitués généralement par des cornières boulonnées sur les éléments circonférentiels ou par des plats. Ce sont aussi des cornières qui constituent les moyens de liaison diagonaux 112, 115 ou 116.

Pour chaque série, les cornières consécutives, c'est-à-dire placées entre trois goussets radiaux consécutifs, sont disposées en oblique l'une par rapport à l'autre. En général, ces cornières sont boulonnées sur des plats 117 fixés dans l'angle formé par les goussets radiaux et les plats, goussets ou raidissages circonférentiels et perpendiculairement à ceux-ci. Dans les bras de renforcement, les cornières sont en outre, montées sur des platines 118 à leur intersection avec une autre cornière.

A l'intérieur d'un bras de renforcement 114, on peut disposer entre les séries 3 et 4 d'éléments circonférentiels deux traverses obliques 119, chacune reliant le sommet d'un élément 106 de la série 4 à la base d'un élément 106 de la série 3.

On notera enfin que, bien entendu, de nombreuses variantes sont encore possibles, sans sortir du cadre de l'invention.

Par exemple, on peut envisager tout autre moyen de fixation convenable des éléments mâle et femelle à la structure ou à la table que ceux qui ont été spécifiquement décrits. C'est ainsi que la coulisse pourrait être soudée à la table ou à la structure plutôt que boulonnée. Bien entendu, le montage à enfourchement de la coulisse qui a été décrit pour le mode de réalisation de la figure 3, pourrait s'appliquer à toute coulisse dans un autre mode de réalisation.

En outre, il n'est pas exclu d'utiliser à la place de la coulisse tout élément profilé ayant un profil différent du profil en U qui a été décrit.

C'est ainsi qu'il serait possible d'utiliser à titre d'élément femelle, une douille à billes ou autolubrifiante dans laquelle, comme élément mâle, serait monté un arbre dont les extrémités libres sortant de la douille, seraient reliées à la table ou à la structure, la douille étant bien sûr, solidaire de l'autre de ces éléments.

On notera aussi que les axes portant les patins ou les galets constituant la partie mâle de l'assemblage de liaison peuvent, dans les cas où cet élément mâle est solidaire de la table, ne pas être fixés directement à un élément de la structure mais, par l'intermédiaire d'une pièce porte-axe, comme celle décrite dans le cas de la figure 6, qui est elle, fixée sur la structure.

De plus, il serait tout à fait possible de modifier le mode de réalisation de la figure en inversant la disposition des éléments d'assemblage, c'est-à-dire avec une coulisse solidaire de la table et l'élément mâle fixé à la structure.

On pourrait aussi placer dans l'assemblage de liaison, une pièce (plaque) d'usure entre l'élément mâle comme les galets ou les patins et l'élément femelle comme la coulisse. Cette pièce pourrait présenter un profil identique à celui de l'élément femelle et serait d'une épaisseur bien précise. Elle permettrait un calage latéral de l'élément mâle contre l'élément femelle et de supprimer le réglage en hauteur de l'élément femelle ou mâle.

Bien entendu, l'invention et notamment tout ce qui concerne la constitution de l'assemblage de liaison table-structure, s'applique à tout filtre comportant une structure porteuse et une table de filtration horizontale supportée par cette structure, quelle que soit la constitution même de la table. Le type de table qui a été spécifiquement décrit n'est bien sûr donné qu'à titre d'exemple. La structure porteuse décrite pourrait aussi être utilisée indépendamment, avec un autre type de table et éventuellement dans ce cas la liaison entre la table et la structure pourrait se faire de toute manière convenable et connue autre que celle spécifiquement décrite.

## Revendications

1. Filtre à table horizontale rotative du type comprenant :
— une structure porteuse circulaire (100) entraînée en rotation par des moyens moteurs,
— une table de filtration (1) horizontale circulaire supportée par la structure,
caractérisé en ce que la table et la structure sont en partie désolidarisées et en ce qu'elles sont reliées par des moyens d'entraînement et de liaison (16) à au moins un degré de liberté radial qui à la fois assurent l'entraînement de la table par la structure et qui permettent un déplacement relatif de l'une par rapport à l'autre dans au moins une direction radiale.

2. Filtre selon la revendication 1, caractérisé en ce que la structure et la table sont séparées en hauteur par un espace (17) dans lequel sont logés, au moins en partie, les moyens de liaison (16) précités.

3. Filtre selon la revendication 1 ou 2 précédente, caractérisé en ce que les moyens de liaison (16) précités comprennent chacun un élément mâle (26), (45), (52) et un élément femelle (18), l'un desdits éléments étant solidaire de la table (1) l'autre de la structure (100).

4. Filtre selon la revendication 3, caractérisé en ce que l'élément femelle (18) est une douille à billes ou autolubrifiante et l'élément mâle, un arbre monté dans la douille et dont les extrémités libres sortant de la douille sont reliées soit à la table soit à la structure selon que la douille est solidaire de la structure ou de la table respectivement.

5. Filtre selon la revendication 3, caractérisé en ce que l'élément femelle est une coulisse radiale (18), de préférence avec un profil sensiblement en U, et l'élément mâle comprend au moins un galet (52) et/ou au moins un patin (26) en un métal ou en un matériau à bas coefficient de frottement par rapport à l'élément femelle, l'élément mâle étant logé dans la coulisse de manière à ce qu'au moins un galet ou au moins un patin soit normalement en contact avec le fond de celle-ci.

6. Filtre selon la revendication 5, caractérisé en ce que la coulisse (18) précitée est en partie fermée par une paire de guides (35), (47) rapportés ou venant de matière avec la coulisse et retenant l'élément mâle dans la coulisse.

7. Filtre selon l'une quelconque des revendications précédentes et du type dans lequel la structure porteuse (100) comporte des éléments d'assemblage radiaux (103) et où la table est constituée par plusieurs secteurs (2) comprenant chacun des parois radiales (3), une ou plusieurs parois formant fond (4) et des parois circonférentielles (5) délimitant un ou plusieurs caissons (6) et une paroi supérieure percée d'orifices, caractérisé en ce que l'un des éléments mâle ou femelle des moyens de liaison (16) précités, est fixé à l'extrémité inférieure de deux parois radiales (3) consécutives de deux secteurs (2) adjacents et en ce que l'autre des éléments est fixé à l'extrémité supérieure d'un élément radial (103) de la structure qui est situé en dessous et à la verticale des parois radiales précitées de la table.

8. Filtre selon l'une quelconque des revendications 5 à 7, caractérisé en ce que la coulisse (18) est solidaire de la table de filtration (1) et en ce que l'élément mâle comprend un axe (39), sur lequel sont montés un ou plusieurs patins (45), et fixé sur ou vers l'extrémité supérieure d'un élément d'assemblage radial (103) de la structure (100) situé en dessous et à la verticale de la coulisse.

9. Filtre selon la revendication 5, 6 ou 7, caractérisé en ce que l'élément mâle comprend une ou plusieurs paires de galets (52) roulant sur le fond de la coulisse (18) et un ou plusieurs patins transversaux (53) disposés parallèlement à l'axe de rotation desdits galets et en dehors de leur plan de roulement, notamment entre deux paires de galets consécutives, et pouvant venir en appui avec les bords latéraux de la coulisse.

10. Filtre selon la revendication 9, caractérisé en ce que chaque paire de galets (52) est montée sur un axe (50) traversant deux parois radiales (3) consécutives de deux secteurs adjacents (2) et fixé sensiblement à leur extrémité inférieure, ou chaque galet sur un demi-axe monté sur chacune des deux parois radiales.

11. Filtre selon l'une quelconque des revendications 7 à 10, caractérisé en ce que l'élément mâle ou femelle des moyens de liaison (16) qui est solidaire de l'élément radial (103) de structure, est monté à enfourchement sur cet élément radial et en ce qu'en vue de permettre un réglage en hauteur de sa position, il est relié par au moins une tige filetée (22), (43) à un second élément de structure (23), (44) solidaire de l'élément radial et perpendiculaire à celui-ci.

12. Filtre selon l'une quelconque des revendications 5 à 11, caractérisé en ce que les patins (26), (45), (53) et galets (52) précités sont constitués d'un alliage métallique tel que le régule ou d'un alliage cuivreux tel que le bronze.

13. Filtre selon l'une quelconque des revendications 5 à 11, caractérisé en ce que les patins (26), (45), (53) et galets (52) précités sont constitués d'un matériau synthétique tel qu'un polymère à haut poids moléculaire, du type polyéthylène, chargé notamment en fibre de verre, polypropylène, polyamide 6 chargé en fibre de verre, polytétrafluoroéthylène chargé en graphite, polyvinylidène difluoré, graphite.

14. Filtre selon l'une quelconque des revendications 5 à 13, caractérisé en ce que le patin (26), (45) présente une forme prismatique notamment sensiblement parallélépipédique, avec éventuellement un évidement ou orifice central pour un montage sur le ou les axes précités et en ce que l'intersection (28), (46) des faces venant en contact avec le fond et un bord latéral de la coulisse respectivement est chanfreinée.

15. Filtre selon l'une quelconque des revendications 7 à 14, caractérisé en ce qu'il comporte au moins deux séries (16) d'éléments mâle et femelle par caisson (6), un desdits éléments étant solidaires des parois radiales (3) consécutives de deux secteurs (2) et chaque série d'éléments étant disposés de préférence, au voisinage des parois circonférentielles (5) délimitant les caissons.

16. Filtre selon l'une quelconque des revendications 7 à 15, caractérisé en ce qu'il comporte un joint d'étanchéité élastique (56) entre les parties en contact de deux parois radiales consécutives (3) de deux secteurs adjacents (2) et en un matériau vulcanisant à température ambiante, tel qu'un silicone.

17. Filtre selon la revendication 16, caractérisé en ce que les parties en contact de deux parois radiales consécutives (3) de deux secteurs adjacents (2) sont soudées et en ce que la soudure est recouverte d'un joint du type précité.

18. Filtre selon l'une quelconque des revendications 3 à 17, caractérisé en ce qu'il comporte une plaque d'usure disposée entre l'élément mâle et l'élément femelle.

19. Filtre selon l'une quelconque des revendications 8, 9 et 11 à 18, caractérisé en ce qu'il comporte des cornières (48) fixées sur le fond externe (36) de la ou des coulisses (18) et de part et d'autre des deux parois radiales consécutives (3) de deux secteurs adjacents (2), lesdites cornières étant disposées de manière à former une gouttière pour la récupération du filtrat ayant pu s'infiltrer sous la table de filtration (1).

20. Filtre selon l'une quelconque des revendications précédentes, caractérisé en ce que son rebord extérieur est constitué par une bande sans fin (13) en matière souple adaptée de manière étanche contre le bord extérieur (12) de la table de filtration et qui s'écarte dudit bord extérieur au droit de la zone d'élimination du gâteau de filtration et de nettoyage de la table.

21. Structure porteuse circulaire pour le support et l'entraînement en rotation d'une table de filtration horizontale d'un filtre rotatif, du type comprenant :
— une première couronne d'entraînement (101) engageant des moyens moteurs et reposant sur un premier chemin de roulement ;
— une seconde couronne interne de liaison (107) ;
— des éléments d'assemblage radiaux (103), tels que des goussets, fixés et reposant sur la première couronne et solidaires à leur extrémité interne et par des moyens de fixation (108) de la seconde couronne ; et
— une ou plusieurs séries radialement espacées d'éléments d'assemblage circonférentiels (106), tels que des goussets, circonférentiellement espacés, solidaires des éléments d'assemblage radiaux et disposés par deux, de part et d'autre de ceux-ci ; caractérisée en ce que ladite structure (100) comporte des moyens de liaison circonférentiels (111) entre les éléments circonférentiels (106) d'une même série et des moyens de liaison et de contreventement diagonaux (112) placés entre des éléments radiaux consécutifs (103).

22. Structure selon la revendication 21, caractérisée en ce qu'elle comporte deux séries de moyens de liaison diagonaux (112a), (112b) et plusieurs séries d'éléments d'assemblage circonférentiels (106), les moyens de liaison (112a) de la première série d'étendant entre la première série, en partant du centre de la structure, d'éléments circonférentiels précités (106) et les moyens de fixation (108), les moyens de liaison de la seconde série (112b) étant placés dans l'espace délimité entre d'une part, la dernière série d'éléments circonférentiels (106) et d'autre part, l'avant-dernière série de ces mêmes éléments (106) ou la série la précédant.

23. Structure selon la revendication 22, caractérisée en ce qu'elle comporte cinq séries d'éléments d'assemblage circonférentiels (106a), (106b), (106c), (106d), (106e).

24. Structure selon la revendication 21, caractérisée en ce qu'elle comporte trois séries d'éléments d'assemblage circonférentiels (106) et en ce que les moyens de liaisons diagonaux (112a) de la première série relient chaque élément radial (103) à la seconde couronne interne de liaison précitée (107).

25. Structure selon l'une des revendications 21, 22 et 23, caractérisée en ce qu'elle comporte des bras de renforcement (114a) (114b) constitués par deux éléments radiaux consécutifs (103) et des moyens de liaison diagonaux (112a), (112b), (115) placés entre ces éléments radiaux et disposés croisés et deux à deux dans l'intervalle entre chaque série d'éléments circonférentiels (106) et dans celui entre la première série d'éléments (106) et les moyens de fixation (108) et soit dans les deux intervalles séparant les trois dernières séries (fig. 15), soit dans l'intervalle entre la dernière et celle précédant l'avant-dernière (figures 9 et 10).

26. Structure selon la revendication 24, caractérisée en ce qu'elle comporte des bras de renforcement (114c) constitués par deux éléments radiaux consécutifs (103) et des moyens de liaison diagonaux (112a), (112b), (116) placés entre ces éléments radiaux et disposés deux à deux dans l'intervalle séparant chacune des première, seconde et troisième séries d'éléments d'assemblage circonférentiels (106) (fig. 16) et qu'ils relient chacun des deux éléments radiaux (103) au moyen de liaison circonférentiel (111) réunissant les éléments circonférentiels (106) de la deuxième série.

27. Structure selon l'une des revendications 25 ou 26, caractérisée en ce qu'elle comporte six bras de renforcement (114).

28. Structure selon l'une quelconque des revendications 21 à 27, caractérisée en ce que la liaison entre les moyens de liaison diagonaux (112), (115), (116) et les éléments radiaux (103) est située à l'intersection des éléments radiaux et des éléments circonférentiels (106).

29. Structure selon l'une quelconque des revendications 21 à 28, caractérisée en ce que les moyens de liaison circonférentiels (111) précités sont constitués par des cornières ou des plats.

30. Structure selon l'une quelconque des revendications 21 à 28, caractérisée en ce que les moyens de liaison diagonaux (112), (115), (116) sont constitués par des cornières.

31. Filtre selon l'une quelconque des revendications 1 à 20 caractérisé en ce qu'il comprend une structure porteuse selon l'une des revendications 22 à 33.

**Claims**

1. A rotary horizontal table type filter of the type comprising :
— a circular carrier structure (100) which is driven in rotation by motor means,
— a circular horizontal filtration table (1) supported by the structure,
characterised in that the table and the structure are in part separate and that they are connected by drive and connecting means (16) having at least one radial degree of freedom, which both provide for drive of the table by the structure and permit relative displacement of one relative to the other in at least a radial direction.

2. A filter according to claim 1 characterised in that the structure and the table are separated in respect of height by a space (17) in which said connecting means (16) are at least partially housed.

3. A filter according to claim 1 or claim 2 characterised in that said connecting means (16) each comprise a male element (26, 45, 52) and a female element (18), one of said elements being fixed with respect to the table (1) and the other with respect to the structure (100).

4. A filter according to claim 3 characterised in that the female element (18) is a ball bearing-type or self-lubricating sleeve and the male element is a shaft which is mounted in the sleeve and the free ends of which, projecting from the sleeve, are connected either to the table or to the structure depending on whether the sleeve is fixed with respect to the structure or the table respectively.

5. A filter according to claim 3 characterised in that the female element is a radial slideway (18), preferably of a substantially U-shaped configuration, and the male element comprises at least one roller (52) and/or at least one slide shoe (26) comprising a metal or a material having a low coefficient of friction with respect to the female element, the male element being disposed in the slideway in such a way that at least one roller or at least one slide shoe is normally in contact with the bottom of the slideway.

6. A filter according to claim 5 characterised in that said slideway (18) is partially closed by a pair of guide members (35, 47) which are fitted to or formed integrally with the slideway and which retain the male element in the slideway.

7. A filter according to any one of the preceding claims and of the type wherein the carrier structure (100) comprises radial assembly elements (103) and wherein the table is formed by a plurality of sectors (2), each comprising radial walls (3), one or more bottom-forming walls (4) and circumferential walls (5) for defining one or more boxes (6) and an upper wall with orifices therethrough, characterised in that one of the male or female elements of said connecting means (16) is fixed to the lower end of two successive radial walls (3) of two adjacent sectors (2) and that the other of the elements is fixed to the upper end of a radial element (103) of the structure, which element is disposed vertically below said radial walls of the table.

8. A filter according to any one of claims 5 to 7 characterised in that the slideway (18) is fixed with respect to the filtration table (1) and that the male element comprises a spindle (39) on which one or more slide shoes (45) are mounted and which is fixed on or towards the upper end of a radial assembly element (103) of the structure (100), which is disposed vertically below the slideway.

9. A filter according to claim 5, claim 6 or claim 7 characterised in that the male element comprises one or more pairs of rollers (52) which run on the bottom of the slideway (18) and one or more transverse slide shoes (53) which are disposed parallel to the axis of rotation of said rollers and outside the plane of rolling movement thereof, in particular between two successive pairs of rollers, and being capable of bearing against the side edges of the slideway.

10. A filter according to claim 9 characterised in that each pair of rollers (52) is mounted on a spindle (50) which passes through two successive radial walls (3) of two adjacent sectors (2) and which is fixed substantially at the lower end thereof, or each roller is mounted on a half-spindle mounted on each of the two radial walls.

11. A filter according to one of claims 7 to 10 characterised in that the male or female element of the connecting means (16), which is fixed with respect to the radial element (103) of the structure, is mounted astride said radial element by a fork configuration and that, in order to permit height adjustment of the position thereof, it is connected by at least one screwthreaded rod (22, 43) to a second structure element (23, 44) which is fixed with respect to the radial element and perpendicular thereto.

12. A filter according to any one of claims 5 to 11 characterised in that the slide shoes (26, 45, 53) and rollers (52) are formed of a metal alloy such as anti-friction metal or a copper a copper alloy such as bronze.

13. A filter according to any one of claims 5 to 11 characterised in that said slide shoes (26, 45, 53) and rollers (52) are formed of a synthetic material such as a polymer of high molecular weight, of the polyethylene type, reinforced in particular with glass fibre, polypropylene, glass fibre reinforced polyamide 6, graphite-filled polytetrafluoroethylene, difluorinated polyvinylidene and graphite.

14. A filter according to any one of claims 5 to 13 characterised in that the slide shoe (26, 45) is of a prismatic and in particular a substantially parallelepipedic shape, with optionally a central aperture or recess for mounting same on said spindle or spindles, and that the intersection (28, 46) of the faces which come into contact with the bottom portion and a side edge portion of the slideway respectively is chamfered.

15. A filter according to any one of claims 7 to 14 characterised in that it comprises at least two series (16) of male and female elements per box (6), one of said elements being fixed with respect to the successive radial walls (3) of two sectors (2) and each series of elements preferably being disposed in the vicinity of the circumferential walls (5) defining the boxes.

16. A filter according to any one of claims 7 to 15 characterised in that it comprises a resilient sealing member (56) between the parts which are in contact of two successive radial walls (3) of two adjacent sectors (2), and comprising a metal which undergoes vulcanisation at ambient temperature such as a silicone.

17. A filter according to claim 16 characterised in that the portions which are in contact of two successive radial walls (3) of two adjacent sectors (2) are welded and that the weld is covered by a seal of the above-mentioned type.

18. A filter according to any one of claims 3 to 17 characterised in that it comprises a wear plate disposed between the male element and the female element.

19. A filter according to any one of claims 8, 9 and 11 to 18 characterised in that it comprises angle members (48) fixed on the outside of the bottom (36) of the slideway or slideways (18) and on respective sides of the two successive radial walls (3) of two adjacent sectors (2), said angle members being so disposed as to form a gutter arrangement for the recovery of filtrate which may have infiltrated below the filtration table (1).

20. A filter according to any one of the preceding claims characterised in that the external rim thereof is formed by an endless belt (13) of flexible material, which sealingly fits against the external edge (12) of the filtration table and which departs from said external edge in line with the region for removal of the filter cake and for cleaning of the table.

21. A circular carrier structure for supporting and rotationally driving a horizontal filtration table of a rotary filter, of the type comprising :
— a first drive ring (101) which engages motor means and which rests on a first rolling track ;
— a second internal connecting ring (107) ;
— radial assembly elements (103) such as gusset members, which are fixed and rest on the first ring and which are fixed at their internal ends and by fixing means (108) with respect to the second ring ; and
— one or more radially spaced series of circumferential assembly elements (106) such as gusset members, which are circumferentially spaced and which are fixed with respect to the radial assembly elements and which are disposed in pairs on respective sides thereof ; characterised in that said structure (100) comprises circumferential connecting means (111) between the circumferential elements (106) of the same series, and diagonal bracing and connecting means (112) disposed between successive radial elements (103).

22. A structure according to claim 21 characterised in that it comprises two series of diagonal connecting means (112a, 112b) and a plurality of series of circumferential assembly elements (106), the connecting means (112a) of the first series extending between the first series, starting from the centre of the structure, of said circumferential elements (106) and the fixing means (108), the connecting means of the second series (112b) being disposed in the space defined between on the one hand the last series of circumferential elements (106) and on the other hand the penultimate series of said same elements (106) or the series preceding same.

23. A structure according to claim 22 characterised in that it comprises five series of circumferential assembly elements (106a, 106b, 106c, 106d and 106e).

24. A structure according to claim 21 characterised in that it comprises three series of circumferential assembly elements (106) and that the diagonal connecting means (112a) of the first series connect each radial element (103) to said second internal connecting ring (107).

25. A structure according to one of claims 21, 22 and 23 characterised in that it comprises reinforcing arms (114a, 114b) which are formed by two successive radial elements (103) and diagonal connecting means (112a, 112b, 115) which are positioned between said radial elements and disposed in a crossed configuration and in pairs in the space between each series of circumferential elements (106) and in that between the first series of elements (106) and the fixing means (108) and either in the two spaces separating the last three series (Figure 15) or in the space between the last series and that preceding the penultimate series (Figures 9 and 10).

26. A structure according to claim 24 characterised in that it comprises reinforcing arms (114c) formed by two successive radial elements (103) and diagonal connecting means (112a, 112b, 116) which are positioned between said radial elements and disposed in pairs in the space between each of the first, second and third series of circumferential assembly elements (106) (Figure 16) and that they connect each of the two radial elements (103) to the circumferential connecting means (111) connecting the circumferential elements (106) of the second series.

27. A structure according to one of claims 25 or 26 characterised in that it comprises six reinforcing arms (114).

28. A structure acording to any one of claims 21 to 27 characterised in that the connection between the diagonal connecting means (112, 115, 116) and the radial elements (103) is located at the intersection of the radial elements and the circumferential elements (106).

29. A structure according to any one of claims 21 to 28 characterised in that said circumferential connecting means (111) are formed by angle members or flat bar members.

30. A structure according to any one of claims 21 to 28 characterised in that the diagonal connecting means (112, 115, 116) are formed by angle members.

31. A filter according to any one of claims 1 to 20 characterised in that it comprises a carrier structure according to one of claims 22 to 33.

**Patentansprüche**

1. Horizontaler Drehtischfilter des Typs, der umfasst :
— eine kreisförmige Trägerkonstruktion (100), die mittels Motorantrieb in Rotation versetzt wird,
— einen runden horizontalen Filtrationstisch (1), der von der Konstruktion getragen wird,
dadurch gekennzeichnet, daß der Tisch und die Konstruktion teilweise nicht starr befestigt sind und daß sie durch Antriebsmittel und Verbindungsvorrichtungen (16) mit wenigstens einem Freiheitsgrad in radialer Richtung verbunden sind, die gleichzeitig für den Antrieb des Tischs durch die Konstruktion sorgen und eine relative Verschiebung der beiden Teile zueinander in wenigstens einer radialen Richtung ermöglichen.

2. Filter nach Anspruch 1, dadurch gekennzeichnet, daß die Konstruktion und der Tisch nach oben durch einen Raum (17) getrennt sind, in dem wenigstens teilweise die genannten Verbindungsvorrichtungen (16) gelagert sind.

3. Filter nach Anspruch 1 oder 2, dadurch gekennzeichnet, daß die genannten Verbindungsvorrichtungen (16) jeweils ein männliches Element (26, 45, 52) und ein weibliches Element (18) enthalten, wobei jeweils eins der Elemente mit dem Tisch (1) und das andere mit der Konstruktion (100) fest verbunden ist.

4. Filter nach Anspruch 3, dadurch gekennzeichnet, daß das weibliche Element (18) eine Kugelfassung oder selbstschmierende Fassung und das männliche Element eine in der Fassung montierte Welle ist, deren freie, aus der Fassung ragenden Teile entweder mit dem Tisch oder mit der Konstruktion verbunden sind, je nachdem, ob die Fassung fest mit der Konstruktion oder dem Tisch verbunden ist.

5. Filter nach Anspruch 3, dadurch gekennzeichnet, daß das weibliche Element eine radiale Gleitvorrichtung ist (18), vorzugsweise mit einem U-förmigen Profil, und das männliche Element mindestens eine Rolle (52) und/oder mindestens eine Gleitbacke (26) aus einem Metall oder einem Material mit niedrigem Reibungskoeffizient, bezogen auf das weibliche Element, ist, wobei das männliche Element in der Gleitvorrichtung so gelagert ist, daß mindestens eine Rolle oder mindestens eine Gleitbacke normalerweise im Kontakt mit ihrem Boden ist.

6. Filter nach Anspruch 5, dadurch gekennzeichnet, daß die genannte Gleitvorrichtung teilweise geschlossen ist durch ein Paar von Führungen (35, 47), die an das Gleitstück angesetzt sind oder einen Teil mit ihm bilden und das männliche Element in dem Gleitstück festhalten.

7. Filter nach einem der vorangehenden Ansprüche und des Typs, bei dem die Trägerkonstruktion (100) radiale Verbindungselemente (103) umfasst und bei dem der Tisch aus mehreren Sektoren (2) besteht, die jeweils radiale Wände besitzen (3), wobei eine oder mehrere Wände Boden (4) und umlaufende Wände (5) bilden, die einen oder mehrere Kasten (6) und eine obere Wand, die mit Öffnungen versehen ist, bilden, dadurch gekennzeichnet, daß eins der männlichen oder weiblichen Elemente der Verbindungsvorrichtungen (16) am unteren Teil von zwei auf einander folgenden radialen Wänden (3) zweier nebeneinander liegender Sektoren (2) befestigt ist und dadurch, daß das andere Element am oberen Teil eines Radialelements (103) der Konstruktion befestigt ist, das sich unten und an der Vertikalen der erwähnten radialen Wände des Tisches befindet.

8. Filter nach einem der Ansprüche 5 bis 7, dadurch gekennzeichnet, daß die Gleitvorrichtung fest mit dem Filtrationstisch (1) verbunden ist, und dadurch daß das männliche Element eine Achse (39) besitzt, auf der eine oder mehrere Gleitbacken (45) montiert sind, und die auf oder gegen den oberen Teil eines radialen Verbindungselements (103) der Konstruktion (100) angebracht ist, das sich unten und an der Vertikalen der Gleitvorrichtung befindet.

9. Filter nach einem der Ansprüche 5 bis 7, dadurch gekennzeichnet, daß das männliche Element ein oder mehrere Paare von Rollen (52) besitzt, die auf dem Boden der Gleitvorrichtung (18) und einer oder mehreren transversalen Gleitbacken (53) rollen, die parallel zur Rotationsachse der Rollen und außerhalb ihrer Rollebene angebracht sind, insbesondere zwischen zwei aufeinander folgenden Paaren von Rollen, und die sich auf die Seitenränder der Gleitvorrichtung stützen können.

10. Filter nach Anspruch 9, dadurch gekennzeichnet, daß jedes Rollenpaar (52) auf eine Achse (50) montiert ist, die zwei aufeinander folgende radiale Wände (3) von zwei nebeneinander liegenden Sektoren (2) durchquert und im wesentlichen an ihrem unteren Teil befestigt ist, oder daß jede Rolle auf einer Halbachse befestigt ist, die auf jede der beiden radialen Wände montiert ist.

11. Filter nach einem der Ansprüche 7 bis 10, dadurch gekennzeichnet, daß das männliche oder weibliche Element der Verbindungsvorrichtungen (16), das mit dem radialen Element (103) der Konstruktion fest verbunden ist, auf Scherzapfen auf dieses radiale Element montiert ist und dadurch, daß es, um eine Regulierung seiner Höheneinstellung zu ermöglichen, mit mindestens einem Gewindebolzen (22, 43) mit einem zweiten Konstruktionselement (23, 44) fest mit dem radialen Element verbunden ist und senkrecht zu ihm steht.

12. Filter nach einem der Ansprüche 5 bis 11, dadurch gekennzeichnet, daß die Gleitbacken (26, 45, 53) und Rollen (52) aus einer Metallegierung wie einem Lagermetall oder aus einer kupferhaltigen Legierung wie Bronze bestehen.

13. Filter nach einem der Ansprüche 5 bis 11, dadurch gekennzeichnet, daß die Gleitbacken (26, 45, 53) und Rollen (52) aus einem synthetischen Material wie einem Polymeren mit hohem Molekulargewicht des Polyethylentyps, insbesondere glasfaserverstärkt, aus Polypropylen, Polyamid-6 mit Glasfasern, Polytetrafluorethylen mit Graphit, Polyvinylidendifluorid, Graphit bestehen.

14. Filter nach einem der Ansprüche 5 bis 13, dadurch gekennzeichnet, daß die Gleitbacken (26, 45) eine prismatische Form, insbesondere eine parallelepipedische Form, besitzt, mit gegebenenfalls einem freien Raum oder einer zentralen Öffnung für eine Montage auf die erwähnten Achsen und dadurch, daß die Schnittlinie (28, 46) der Flächen, die mit dem Boden und einer seitlichen Begrenzung der Gleitvorrichtung in Berührung kommen, abgeschrägt ist.

15. Filter nach einem der Ansprüche 7 bis 14, dadurch gekennzeichnet, daß er mindestens zwei Reihen (16) von männlichen und weiblichen Elementen je Kasten (6) enthält, wobei die genannten Elemente fest an aufeinander folgenden radialen Wänden (3) zweier Sektoren (2) angebracht sind und jede Elementreihe vorzugsweise in der Nähe der umlaufenden Wände (5), die die Kästen begrenzen, angebracht sind.

16. Filter nach einem der Ansprüche 7 bis 15, dadurch gekennzeichnet, daß er einen elastischen Dichtungsring (56) zwischen den Teilen im Kontakt mit zwei aufeinander folgenden radialen Wänden (3) zweier nebeneinander liegender Sektoren (2) trägt, der aus einem bei Umgebungstemperatur vulkanisierenden material, wie einem Silikon, besteht.

17. Filter nach Anspruch 16, dadurch gekennzeichnet, daß die Teile im Kontakt mit zwei aufeinander folgenden radialen Wänden (3) von zwei nebeneinander liegenden Sektoren (2) geschweißt sind und daß die Schweißnaht mit einer Dichtung des genannten Typs bedeckt ist.

18. Filter nach einem der Ansprüche 3 bis 17, dadurch gekennzeichnet, daß er zwischen dem männlichen und dem weiblichen Element eine Verschleißplatte trägt.

19. Filter nach einem der Ansprüche 8, 9 oder 11 bis 18, dadurch gekennzeichnet, daß er Winkeleisen (48) trägt, die auf dem äußeren Boden (36) der Gleitvorrichtung (18) und auf beiden Seiten der beiden aufeinander folgenden radialen Wände (3) von zwei nebeneinander liegenden Sektoren (2) befestigt sind, wobei die genannten Winkeleisen so angebracht sind, daß sie eine Rinne zur Rückgewinnung des Filtrats bilden, das unter den Filtrationstisch (1) eindringen konnte.

20. Filter nach einem der vorangehenden Ansprüche, dadurch gekennzeichnet, daß sein äußerer Rand durch ein Endlosband (13) aus geschmeidigem Material gebildet wird, das dicht gegen den Außenrand (12) des Filtrationstischs angepasst ist und das sich von dem Außenrand im Bereich der Austragungszone des Filterkuchens und bei der Reinigung des Tisches abdrückt.

21. Kreisförmige Trägerkonstruktion zum Tragen und zum Rotationsantrieb eines horizontalen Filtertischs eines Drehfilters, des Typs, der umfasst :

— einen ersten Antriebskranz (101) mit Motorantrieb, der auf einem ersten Rollweg ruht ;

— einen zweiten inneren Verbindungskranz (107) ;

— radiale Verbindungselemente (103), wie Versteifungen, angebracht und ruhend auf dem ersten Kranz und starr befestigt an ihrem inneren Teil und mit Befestigungsmitteln (108) des zweiten Kranzes und

— eine oder mehrere Reihen von Elementen zur umlaufenden Verbindung (106), die radial im Abstand angebracht sind, wie Versteifungen, die umlaufend im Abstand angebracht und fest mit radialen Befestigungselementen und in Zweiergruppen auf jeder Seite angebracht sind ; dadurch gekennzeichnet, daß die Konstruktion (100) umlaufende Befestigungsvorrichtungen (111) zwischen den umlaufenden Elementen (106) der gleichen Serie und Verbindungsvorrichtungen und diagonale Längsverbindungen (112), die zwischen aufeinanderfolgenden radialen Elementen (103) angebracht sind, trägt.

22. Konstruktion nach Anspruch 21, dadurch gekennzeichnet, daß sie je zwei Serien von diagonalen Verbindungsvorrichtungen (112a, 112b) und mehrere Serien von umlaufenden Verbindungselementen (106) umfasst, wobei die Verbindungsmittel (112a) der ersten Serie sich — ausgehend vom Zentrum der Konstruktion — zwischen der ersten Serie der genannten umlaufenden Elemente (106) und den Befestigungsvorrichtungen (108) erstrecken, wobei die Befestigungsvorrichtungen der zweiten Serie (112b) in dem Raum untergebracht sind, der einerseits durch die letzte Serie von umlaufenden Elementen (106) und andererseits die vorletzte Serie der gleichen Elemente (106) oder die ihr vorausgehende Serie begrenzt ist.

23. Konstruktion nach Anspruch 22, dadurch gekennzeichnet, daß sie fünf Serien von umlaufenden Verbindungselementen umfasst (106a, 106b, 106c, 106d, 106e).

24. Konstruktion nach Anspruch 21, dadurch gekennzeichnet, daß sie drei Serien von umlaufenden Befestigungselementen (106) besitzt und daß die diagonalen Verbindungsvorrichtungen (112a) der ersten Serie jedes radiale Element (103) mit dem erwähnten zweiten inneren Verbindungskranz (107) verbinden.

25. Konstruktion nach einem der Ansprüche 21 bis 23, dadurch gekennzeichnet, daß sie Verstärkungsarme (114a, 114b) umfasst, die aus zwei aufeinanderfolgenden Radialelementen (103) und diagonalen Verbindungsvorrichtungen (112a, 112b, 115) bestehen, die zwischen diesen radialen und kreuzförmig in Zweiergruppen angebrachten Elementen im Intervall zwischen jeder Serie von umgebenden Elementen (106) und in dem zwischen der ersten Elementserie (116) und den Befestigungsvorrichtungen (108) entweder in den beiden Intervallen, die die drei letzten Serien (Figur 15) trennen, oder in dem Intervall zwischen der letzten und der ihr vorangehenden vorletzten (Figuren 9 und 10), angebracht sind.

26. Konstruktion nach Anspruch 24, dadurch gekennzeichnet, daß sie Verstärkungsarme (114c) trägt, die aus zwei aufeinanderfolgenden radialen Elementen (103) und diagonalen Verbindungsvorrichtungen (112a, 112b, 116) bestehen, die zwischen den radialen Elementen und in Zweiergruppen in dem Abstand angebracht sind, der jede der ersten, zweiten und dritten Serie von umlaufenden Befestigungselementen (106) (Figur 16) trennt, und dadurch, daß sie jedes der beiden radialen Elemente (103) mit Hilfe des umlaufenden Verbindungselements (111) verbinden, das die umlaufenden Elemente (106) der zweiten Serie vereinigt.

27. Konstruktion nach einem der Ansprüche 25 oder 26, dadurch gekennzeichnet, daß sie sechs Verstärkungsarme trägt (114).

28. Konstruktion nach einem der Ansprüche 21 bis 27, dadurch gekennzeichnet, daß die Verbindung zwischen den diagonalen Verbindungsvorrichtungen (112, 115, 116) und den radialen Elementen (103) auf der Schnittlinie zwischen den radialen Elementen und den umlaufenden Elementen (106) angebracht ist.

29. Konstruktion nach einem der Ansprüche 21 bis 28, dadurch gekennzeichnet, daß die umgebenden Verbindungsvorrichtungen (111) aus Winkeleisen oder Platten bestehen.

30. Konstruktion nach einem der Ansprüche 21 bis 28, dadurch gekennzeichnet, daß die diagonalen Verbindungsvorrichtungen (112, 115, 116) aus Winkeleisen bestehen.

31. Filter nach einem der Ansprüche 1 bis 20, dadurch gekennzeichnet, daß er eine Trägerkonstruktion nach einem der Ansprüche 21 bis 30 umfasst.

Fig 1

0 088 003

Fig 2

# Fig 3

# Fig 4

# Fig 5

Fig 6

Fig 7

0 088 003

Fig 8

# Fig 9

Fig 10

0 088 003

# Fig 14

# Fig 13

# Fig 12

# Fig 11

# Fig 15

# Fig 16